# EUROPÄISCHE PATENTSCHRIFT

(11) **EP 3 381 260 B1**
(45) Veröffentlichungstag und Bekanntmachung des Hinweises auf die Patenterteilung: **14.06.2023**
(21) Anmeldenummer: 18155533.5
(22) Anmeldetag: 07.02.2018
(51) Int. Cl.: A01D 34/74

(54) **BODENBEARBEITUNGSGERÄT**
GROUND WORKING IMPLEMENT
OUTIL DE TRAVAIL AU SOL

(30) Priorität: 29.03.2017 DE 102017205289
(43) Veröffentlichungstag der Anmeldung: 03.10.2018
(73) Patentinhaber: Robert Bosch GmbH, 70442 Stuttgart (DE)
(72) Erfinder: Aristidou, Andrew, Suffolk, IP6 8QR (GB); Ager, Chris, Suffolk, IP4 2SZ (GB); Tonks, Philip, Suffolk, IP14 5FB (GB); Taylor, Jon, Norfolk, IP24 1RS (GB)

(56) Entgegenhaltungen:
- EP-B1- 2 371 197
- WO-A1-2016/165755
- GB-A- 2 413 254

## Beschreibung

### Stand der Technik

In der EP 2371197 B1 ist ein Rasenmäher mit einem Höheneinstellmechanismus zum Einstellen einer Höhe des Gehäuses und des Messers in Bezug auf einen Boden beschrieben. Ferner sei auf die WO 2016/165755 A1 verwiesen.

### Offenbarung der Erfindung

Die Erfindung betrifft ein Bodenbearbeitungsgerät, insbesondere einen Rasenmäher, mit den Merkmalen des Anspruchs 1. Vorteilhaft kann dadurch ein besonders kompakter Betätigungsmechanismus für eine Höhenverstellvorrichtung realisiert werden.

Unter einem Bodenbearbeitungsgerät soll insbesondere ein Gartengerät verstanden werden, dass bei der Arbeit im Garten oder in Parkanlagen verwendet wird. Das Bodenbearbeitungsgerät weist vorzugsweise einen Motor auf, der als Elektromotor oder als Verbrennungsmotor ausgebildet sein kann. Der Elektromotor kann dabei über einen Netzanschluss oder mittels einer integrierten Energieversorgung wie einer Batterie oder einem insbesondere wechselbaren Akkupack mit Energie versorgt werden. Der Motor des Bodenbearbeitungsgeräts ist zumindest teilweise im Gehäuse aufgenommen. Der Motor ist insbesondere dazu ausgebildet ein Mähwerk anzutreiben, das Schneideelemente zum Mähen von Gras aufweist. Bevorzugt weist das Bodenbearbeitungsgerät zumindest zwei Räder auf, mittels derer das Bodenbearbeitungsgerät über den Boden bewegt werden kann. Insbesondere weist das Bodenbearbeitungsgerät zumindest ein Vorderrad und ein Hinterrad auf. Vorzugsweise weist das Bodenbearbeitungsgerät ein paar Vorderräder und ein paar Hinterräder auf, die jeweils über eine Radachse miteinander verbunden sind. Die Räder weisen eine zentrische Rotationsachse auf, um die die Räder während der Bewegung des Bodenbearbeitungsgeräts drehbar sind. Zusätzlich sind die Räder um eine Schwenkachse relativ zum Gehäuse schwenkbar gelagert. Die Höhenverstellvorrichtung zur Schnitthöhenverstellung ist insbesondere dazu ausgebildet, den Abstand zwischen dem Gehäuse und den Rädern einzustellen. Bevorzugt kann dadurch der Abstand zwischen dem Mähwerk und einer Ebene, die durch die Radachsen der Räder aufgespannt wird, und damit der Abstand zwischen dem Mähwerk und dem Boden, eingestellt werden. In den zwei unterschiedlichen Positionen ist der Abstand zwischen dem Gehäuse und den Rotationsachsen der Räder beziehungsweise dem Boden unterschiedlich. Unter einer "Kopplung der Schwenkbewegungen der Räder" soll insbesondere verstanden werden, dass über das Koppelglied der Höhenverstellvorrichtung eine Schwenkbewegung zumindest eines der Räder in eine Schwenkbewegung eines der anderen Räder um vorzugsweise denselben Winkel übertragen wird. Bevorzugt wird die Schwenkbewegung zumindest eines Hinterrads in eine Schwenkbewegung zumindest eines Vorderrads um denselben Winkel übertragen. Die Höhenverstellvorrichtung ist über das Betätigungselement betätigbar. Im betätigten Zustand sind die Räder um die Schwenkachse frei schwenkbar ausgebildet, sodass die Schnitthöhe, beziehungsweise der Abstand des Mähwerks von den Rädern eingestellt werden kann. Zur Betätigung des Betätigungselements wirkt eine Kraft auf den Betätigungsbereich des Betätigungselements. Insbesondere ist der Betätigungsbereich durch einen Benutzer des Bodenbearbeitungsgeräts betätigbar. Der Betätigungsbereich und der Fixierbereich sind insbesondere derart unbeweglich miteinander verbunden, dass eine Betätigung des Betätigungsbereichs in ein Lösen der formschlüssigen Verbindung zwischen dem Fixierbereich und dem Koppelglied übertragen wird. Insbesondere wird eine Bewegung des Betätigungsbereichs direkt in eine Bewegung des Fixierbereichs übertragen. Vorzugsweise ist das Betätigungselement mit dem Fixierbereich und dem Betätigungsbereich einstückig ausgebildet. Der Fixierbereich und das Koppelglied weisen jeweils korrespondieren Formschlusselemente zur Ausbildung einer lösbaren formschlüssigen Verbindung auf. Unter einer formschlüssigen Verbindung soll dabei insbesondere ein ineinandergreifen der Formschlusselemente verstanden werden. Vorzugsweise ist der Fixierbereich und das Koppelglied kraft- und formschlüssig, insbesondere über eine Rastverbindung, miteinander verbunden.

Des Weiteren wird vorgeschlagen, dass das Betätigungselement im Gehäuse versenkbar ausgebildet ist. Vorteilhaft kann dadurch ein besonders kompaktes Bodenbearbeitungsgerät realisiert werden. Insbesondere taucht der Betätigungsbereich des Betätigungselements im betätigten Zustand derart in das Gehäuse des Bodenbearbeitungsgeräts ein, dass der Betätigungsbereich innerhalb der Außenkontur des Gehäuses angeordnet ist. Alternativ oder zusätzlich ist auch denkbar, dass der Betätigungsbereich bündig mit der Gehäuseaußenfläche abschließt, um die Ergonomie des Bodenbearbeitungsgeräts weiter zu verbessern. Vorteilhaft kann das Betätigungselement dadurch robust gegen Krafteinwirkung von außen ausgebildet und optimal geführt werden.

Weiterhin wird vorgeschlagen, dass die Höhenverstellvorrichtung derart federbelastet ist, dass während einer Betätigung des Betätigungselements das Koppelglied zumindest kraftlos oder selbsttätig verschoben wird. Vorteilhaft kann dadurch die Bedienung der Höhenverstellvorrichtung erleichtert werden. Unter einer Federbelastung soll dabei insbesondere eine Zugbelastung verstanden werden. Vorzugsweise ist die Federbelastung derart ausgebildet, dass eine Kraft auf die Höhenverstellvorrichtung, insbesondere auf das Koppelglied der Höhenverstellvorrichtung, in Richtung einer Extremposition der Höhenverstellvorrichtung wirkt. Unter einer Extremposition soll dabei insbesondere eine Maximalposition verstanden werden. In der Maximalposition ist der Abstand des Gehäuses zu den Rädern maximal, während der Abstand in einer Minimalposition minimal ist.

Zudem wird vorgeschlagen, dass das Koppelglied von einem Rückstellelement entlang der Bewegungsrichtung des Koppelglieds belastet wird. Vorteilhaft kann dadurch die Bedienung der Höhenverstellvorrichtung weiter erleichtert werden. Vorzugsweise ist das Rückstellelement derart ausgelegt, dass die Kraft des Rückstellelements einer Gewichtskraft des Bodenbearbeitungsgeräts entgegenwirkt, insbesondere kompensiert.

Das Koppelglied ist vorteilhaft beweglich im Gehäuse des Bodenbearbeitungsgeräts angeordnet. Die Bewegung des Koppelglieds kann translatorisch oder vorzugsweise auf einer Kreisbogenbahn erfolgen.

Weiterhin wird vorgeschlagen, dass die Höhenverstellvorrichtung zwei Gelenke aufweist, die das Koppelglied parallelogrammartig lagern. Vorteilhaft kann dadurch eine gleichmäßige Schwenkbewegung der Räder realisiert werden. Die Gelenke sind jeweils schwenkbar um die Schwenkachse und eine Koppelachse, um die die Gelenke schwenkbar mit dem Koppelglied verbunden sind, gelagert. Der Abstand der Koppelachse und der Schwenkachse der beiden Gelenke ist identisch und parallel zueinander ausgebildet.

Des Weiteren wird vorgeschlagen, dass das Koppelglied zumindest zwei, insbesondere sechs, Aufnahmetaschen aufweist, die verbindbar mit dem Betätigungselement sind. Vorteilhaft kann dadurch eine sichere Fixierung der Höhenverstellvorrichtung realisiert werden. Insbesondere entspricht die Anzahl an Aufnahmetaschen des Koppelglieds der Anzahl an unterschiedlichen Positionen, in denen die Räder durch die Höhenverstellvorrichtung fixierbar sind. Die Aufnahmetaschen sind vorzugsweise einstückig mit dem Koppelglied ausgebildet. Vorzugsweise sind die Aufnahmetaschen zum Boden hin geöffnet ausgebildet.

Zudem wird vorgeschlagen, dass das Koppelglied ein Anzeigeelement aufweist, das benachbart zu den Aufnahmetaschen angeordnet ist. Insbesondere ist das Anzeigeelement dazu ausgebildet, die eingestellte Schnitthöhe beziehungsweise die Position, in der die Räder fixiert sind, anzuzeigen. Das Anzeigeelement kann innerhalb oder außerhalb des Gehäuses angeordnet sein. Das Anzeigeelement kann einstückig oder lösbar verbunden mit der Höhenverstellvorrichtung, insbesondere dem Koppelglied, ausgebildet sein.

Weiterhin wird vorgeschlagen, dass das Anzeigeelement teilweise im Gehäuse und teilweise in der Höhenverstellvorrichtung geführt ist. Vorteilhaft kann dadurch ein flexibel platzierbares Anzeigeelement realisiert werden. Vorzugsweise weist das Anzeigeelement zwei Freiheitsgrade, insbesondere zwei translatorische Freiheitsgrade auf. Die zwei translatorischen Freiheitsgrade stehen senkrecht zueinander. Vorzugsweise ist das Anzeigeelement in einem unbeweglich im oder am Gehäuse befestigten Bauteil (erster Freiheitsgrad) und in einem der Gelenke oder in dem Koppelglied der Höhenverstellvorrichtung (zweiter Freiheitsgrad) geführt.

Des Weiteren wird vorgeschlagen, dass das Anzeigeelement über eine Gehäuseöffnung des Gehäuses von außen sichtbar ist. Vorteilhaft kann dadurch das Anzeigeelement geschützt im inneren des Gehäuses aufgenommen sein. In der Gehäuseöffnung ist vorzugsweise ein Fensterelement angeordnet, durch das das Anzeigeelement zumindest teilweise sichtbar ist. Die Bewegung des Anzeigeelements ist vorteilhaft mit der Bewegung der Höhenverstellvorrichtung derart gekoppelt, dass durch das Fenster nur die aktuelle Position der Höhenverstellvorrichtung, beziehungsweise die aktuelle Position der Räder relativ zum Gehäuse, sichtbar ist.

Weiterhin wird vorgeschlagen, dass das Betätigungselement, die Aufnahmetaschen, das Rückstellelement und das Anzeigeelement vollständig zwischen den Gelenken angeordnet sind. Vorteilhaft kann dadurch ein besonders kompakter Aufbau realisiert werden. Insbesondere sind die Gehäuseöffnung, das Anzeigeelement, die Aufnahmetasche und das Betätigungselement im Wesentlichen untereinander angeordnet. Unter "untereinander angeordnet" soll dabei verstanden werden, dass eine Gerade diese Bauteile nacheinander schneidet.

Zudem wird vorgeschlagen, dass das Betätigungselement benachbart zu, insbesondere benachbart zwischen, dem Anzeigeelement und einem Handgriff angeordnet ist. Vorteilhaft wird dadurch die Bedienung der Höhenverstellvorrichtung besonders erleichtert. Der Handgriff ist erfindungsgemäß derart von dem Betätigungsbereich des Betätigungselements beabstandet, dass beim Umgreifen des Handgriffs mit einer Handinnenfläche gleichzeitig das Betätigungselement mit dem Daumen betätigt werden kann. Der Abstand zwischen dem Betätigungsbereich und der Gehäuseöffnung ist vorzugsweise kleiner als 50% der Länge des Handgriffs, bevorzugt kleiner als 25% der Länge des Handgriffs. Dadurch kann eine einhändige Bedienung der Höhenverstellvorrichtung realisiert werden.

Des Weiteren wird vorgeschlagen, dass das Betätigungselement, das Anzeigeelement und der Handgriff auf derselben Höhe angeordnet sind. Vorteilhaft kann dadurch die Bedienung der Höhenverstellvorrichtung weiter erleichtert werden.

### Zeichnungen

Weitere Vorteile ergeben sich aus der folgenden Zeichnungsbeschreibung. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Bodenbearbeitungsgeräts;
- Fig. 2: eine perspektivische Ansicht von zwei Vorderrädern, die über eine Radachse miteinander verbunden sind;
- Fig. 3: eine Seitenansicht einer Höhenverstellvorrichtung;
- Fig. 4: ein Querschnitt durch das Bodenbearbeitungsgerät nach Fig. 1;
- Fig. 5a: eine perspektivische Ansicht der Höhenverstellvorrichtung im unbetätigten Zustand;
- Fig. 5b: eine perspektivische Ansicht der Höhenverstellvorrichtung im betätigten Zustand;
- Fig. 5c: eine perspektivische Ansicht der Höhenverstellvorrichtung in einem weiteren betätigten Zustand;
- Fig. 6a: eine perspektivische Ansicht des Bodenbearbeitungsgeräts in einer Minimalposition;
- Fig. 6b: eine perspektivische Ansicht des Bodenbearbeitungsgeräts in einer Maximalposition.

### Beschreibung der Ausführungsbeispiele

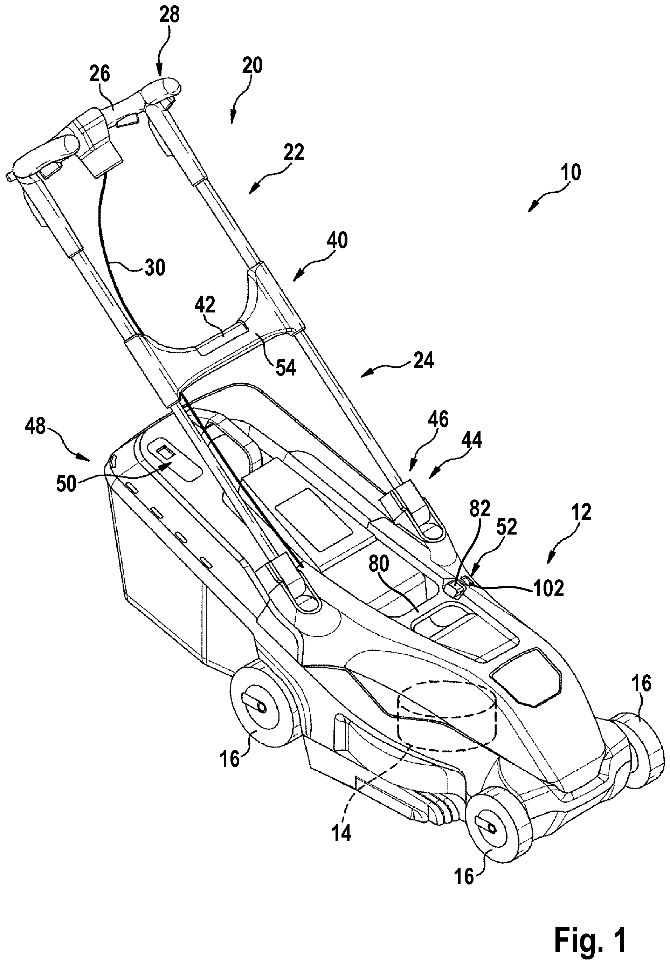

In Fig. 1 ist ein erfindungsgemäßes Bodenbearbeitungsgerät 10 gezeigt. Das Bodenbearbeitungsgerät 10 ist als Rasenmäher ausgebildet und umfasst ein Gehäuse 12, in dem ein Mähwerk 14 aufgenommen ist. Das Mähwerk 14 umfasst Schneideelemente (nicht dargestellt), die beim Betrieb des Bodenbearbeitungsgeräts 10 zum Schneiden von Gras eingesetzt werden. Mit dem Fahrgestell sind vier Räder 16 verbunden. Das Bodenbearbeitungsgerät 10 ist als ein elektrisches Bodenbearbeitungsgerät 10 ausgebildet. Eine Energieversorgung des Bodenbearbeitungsgeräts 10 erfolgt dabei entweder über einen Netzanschluss oder über einen Energiespeicher, wie beispielsweise einen wiederaufladbaren Akkupack. Über die Energieversorgung wird zumindest eine Elektronik (nicht dargestellt) und ein Elektromotor (nicht dargestellt) mit Energie versorgt. Die Elektronik ist zur Steuerung des Bodenbearbeitungsgeräts 10, insbesondere zur Steuerung des Elektromotors des Bodenbearbeitungsgeräts 10, ausgebildet. Über den Elektromotor wird das Mähwerk 14, insbesondere die Schneideelemente des Mähwerks 14, angetrieben.

Das Gehäuse 12 ist mit einer Führungsvorrichtung 20 verbunden, über die das Bodenbearbeitungsgerät 10 per Hand führbar ist. Die Führungsvorrichtung 20 weist zwei Führungsglieder 22, 24 auf, die teleskopartig ineinander geführt sind. Das erste Führungsglied 22 umfasst einen Griffbereich 26. Der Griffbereich 26 umfasst eine Schalteinheit 28, die elektrisch mit der Elektronik des Bodenbearbeitungsgeräts 10 verbunden ist. Die Verbindung erfolgt beispielhaft über eine Kabelverbindung, es ist allerdings auch denkbar, dass die Verbindung zwischen der Schalteinheit 28 und der Elektronik drahtlos erfolgt. Die elektrische Verbindung erfolgt beispielhaft über ein Kabelelement 30. Im verbundenen Zustand kann durch eine Betätigung der Schalteinheit 28 der Elektromotor gesteuert, insbesondere ein- und ausgeschaltet, werden.

Das erste Führungsglied 22 und das zweite Führungsglied 24 sind lösbar miteinander verbunden. Das erste Führungsglied 22 weist eine Fixiereinheit 40 zur lösbaren Fixierung des ersten Führungsglieds 22 am zweiten Führungsglied 24 auf. Die Fixiereinheit 40 weist ein Bedienelement 42 auf, wobei über eine Betätigung des Bedienelements 42 die Fixierung des ersten Führungsglieds 22 am zweiten Führungsglied 24 lösbar ist. Das zweite Führungsglied 24 umfasst eine Schwenkeinheit 44, über die die Führungsvorrichtung 20 schwenkbar mit dem Gehäuse 12 des Bodenbearbeitungsgeräts 10 verbunden ist. Die Schwenkeinheit 44 weist des Weiteren eine betätigbare Sicherungsvorrichtung 46 auf, die in einem unbetätigten Zustand ein Schwenken der Führungsvorrichtung 20 gegenüber dem Gehäuse 12 verhindert.

Am Gehäuse 12 des Bodenbearbeitungsgeräts 10 ist ein Auffangbehälter 48 lösbar verbunden. Der Auffangbehälter 48 ist insbesondere als ein Grasauffangbehälter ausgebildet. Der Auffangbehälter 48 ist insbesondere faltbar ausgebildet, sodass er geleert und im gefalteten Zustand platzsparend gelagert werden kann. Des Weiteren weist der Auffangbehälter 48 eine Anzeigevorrichtung 50 auf, über die ein Füllstand des Auffangbehälters 48 anzeigbar ist. Weiterhin umfasst das Bodenbearbeitungsgerät 10 eine Höhenverstellvorrichtung 52 zur Einstellung einer Schnitthöhe des Bodenbearbeitungsgeräts. Vorteilhaft kann über die Höhenverstellvorrichtung 52 der Abstand zwischen den Rädern 14 und dem Mähwerk 14, beziehungsweise einer zu bearbeitenden Oberfläche, eingestellt werden.

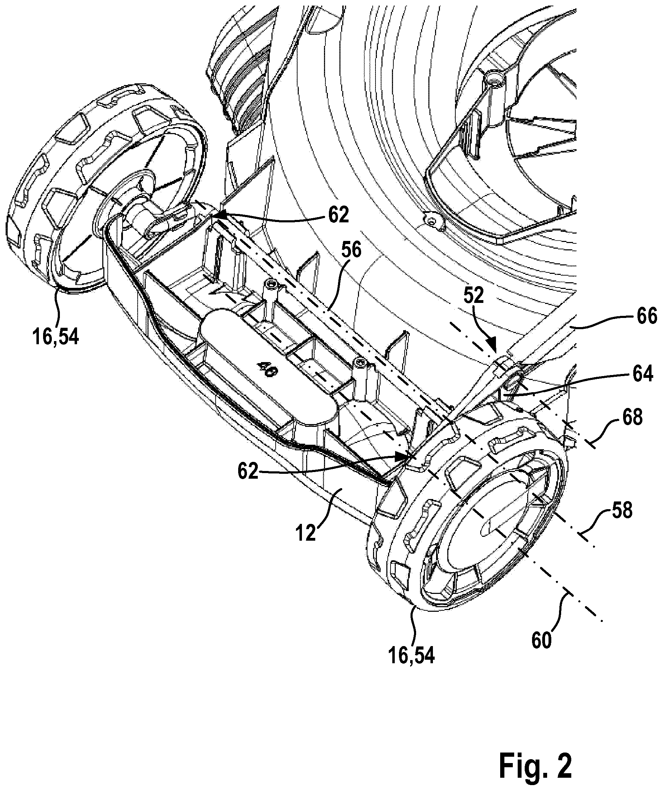

In Fig. 2 sind die als Vorderräder 54 ausgebildeten vorderen Räder 14 des Bodenbearbeitungsgeräts 10 gezeigt. Die Räder 14 sind über eine Radachse 56 miteinander verbunden. Die Radachse 56 ist schwenkbar um eine Schwenkachse 58 im Gehäuse 12 des Bodenbearbeitungsgeräts 10 gelagert. Die Räder 14 sind drehbar um eine Rotationsachse 60 auf der Radachse 56 gelagert. Die Radachse 56 ist an ihren beiden Endbereichen 62 kurbelartig gebogen, sodass die Rotationsachse 60 der Räder beabstandet von der Schwenkachse 58 der Radachse 56 ist. Die Radachse 56 ist mittels der Höhenverstellvorrichtung 52 in unterschiedlichen Positionen, beziehungsweise Schwenkpositionen, fixierbar. Hierfür ist die Radachse 56 an einem der beiden Endbereich 62 drehfest mit einem ersten Gelenk 64 der Höhenverstellvorrichtung 52 verbunden. Das erste Gelenk 64 ist drehbar mit einem Koppelglied 66 verbunden. Die Drehung erfolgt um eine Koppelachse 68.

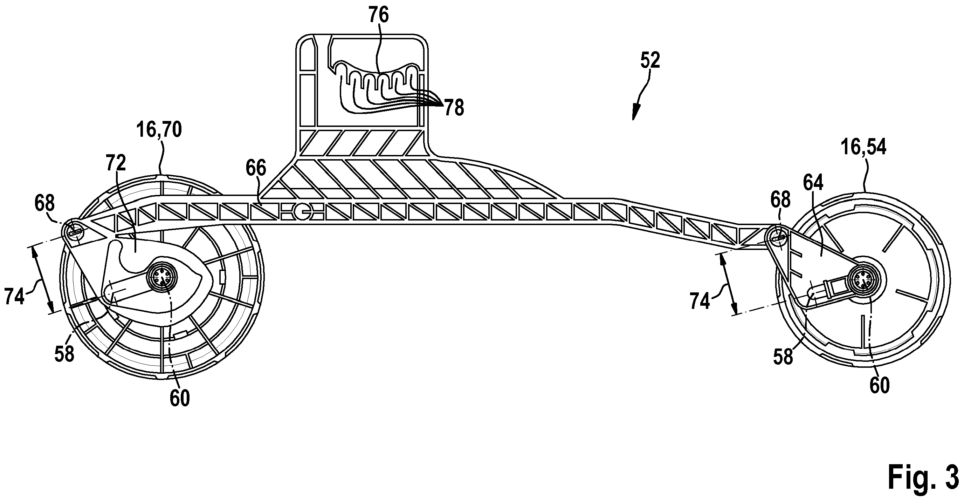

Analog zu den Vorderrädern 54 sind auch die Hinterräder 70 über eine nicht dargestellte Radachse, die an ihren Endbereichen kurbelartig gebogen ist, miteinander verbunden und weisen eine Rotationsachse 60 und eine Schwenkachse 58 auf (siehe Fig. 3). Die Radachse, die die Hinterräder 70 miteinander verbindet ist ebenfalls drehfest mit einem zweiten Gelenk 72 verbunden, das wiederum drehbar um eine Koppelachse 68 mit dem Koppelglied 66 verbunden ist. Das Koppelglied 66 ist beweglich im Gehäuse 12 des Bodenbearbeitungsgeräts 10 aufgenommen und koppelt eine Schwenkbewegung des ersten Gelenks 64 mit einer Schwenkbewegung des zweiten Gelenks 72 derart, dass sich die beiden Gelenke 64, 72, und damit die Vorderräder 54 und die Hinterräder 70, um im Wesentlichen denselben Winkelbereich um die Schwenkachsen 58 verschwenken lassen. Dies wird dadurch realisiert, dass die Gelenke 64, 72 das Koppelglied parallelogrammartig lagern. Insbesondere weisen die beiden Gelenke 64, 72 den gleichen Abstand 74 zwischen der Schwenkachse 58 und der Koppelachse 68 auf und zudem ist eine Gerade, die senkrecht zu der Koppelachse 68 und der Schwenkachse 58 des ersten Gelenks 64 verläuft, im Wesentlichen parallel zu einer Geraden, die senkrecht zu der Koppelachse 68 und der Schwenkachse 58 des zweiten Gelenks 72 verläuft.

Um die Höhenverstellvorrichtung 52 und damit die Räder 14 in unterschiedlichen Positionen zu fixieren, weist die Höhenverstellvorrichtung 52 ein Formschlusselement 76 auf. Das Formschlusselement 76 weist mehrere Aufnahmetaschen 78 auf, die seitlich am Koppelglied 66 angeordnet und nach unten offen ausgebildet sind. Das Koppelglied 66 weist beispielhaft sechs Aufnahmetaschen auf, um die Räder 14 in sechs unterschiedlichen Schwenkpositionen zu fixieren, es sind allerdings auch mehr oder weniger Aufnahmetaschen denkbar.

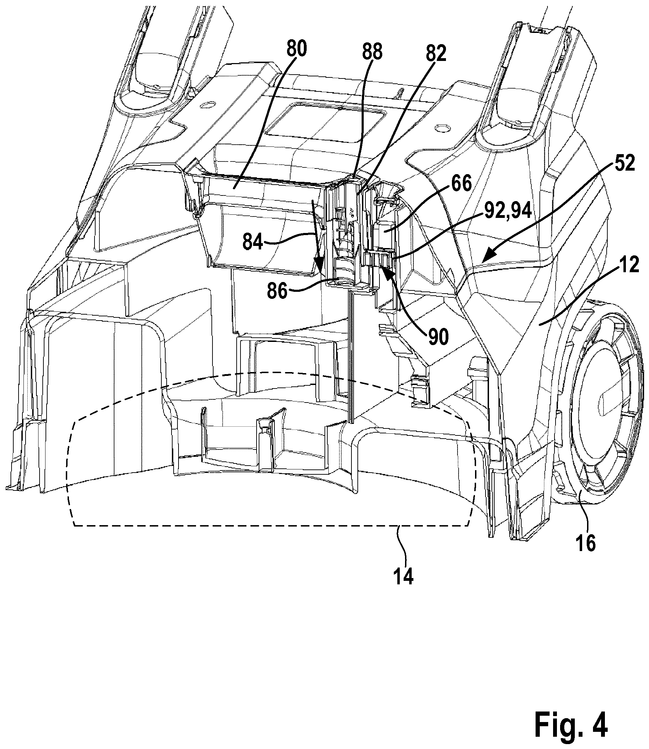

In Fig. 4 ist ein Querschnitt durch das Bodenbearbeitungsgerät 10 gezeigt. Oberhalb des Mähwerks 14 ist auf der Oberseite des Gehäuses 12 ein Handgriff 80 angeordnet, der vorteilhaft bei einer Betätigung der Höhenverstellvorrichtung 52 zur Schnitthöheneinstellung gegriffen werden kann. Um einen besonders sicheren Halt zu gewährleisten, ist der Handgriff 80 zentral über dem Mähwerk 14 angeordnet. Durch die zentrale Anordnung ist der Handgriff 80 zudem zum Tragen des Bodenbearbeitungsgeräts 10 vorgesehen. Vorzugsweise ist der Handgriff 80 im Bereich des Schwerpunkts, insbesondere am oder über dem Schwerpunkt, des Bodenbearbeitungsgeräts 10 angeordnet, wodurch ein hoher ergonomischer Tragekomfort erzielt werden kann.

Zudem erstreckt sich der Handgriff 80 vorteilhaft im Wesentlichen parallel zu der Rotationsachse 60 der Räder 14. Benachbart zu dem Handgriff 80 ist ein Betätigungselement 82 zur Betätigung der Höhenverstellvorrichtung 52 angeordnet. Das Betätigungselement 82 ist im Gehäuse 12 des Bodenbearbeitungsgeräts 10 translatorisch beweglich gelagert. Das Betätigungselement 82 wird entgegen seiner Betätigungsrichtung 84 von einem als Spiralfeder ausgebildeten Federelement 86 mit einer Kraft beaufschlagt. Das Betätigungselement 82 weist einen Betätigungsbereich 88 auf, der aus dem Gehäuse 12 herausragt. Über den Betätigungsbereich 88 kann ein Bediener des Bodenbearbeitungsgeräts 10 das Betätigungselement 82 mit einer Kraft entgegen der Federkraft des Federelements 86 betätigen. Im Inneren des Gehäuses 12 weist das Betätigungselement 82 einen Fixierbereich 90 auf. Der Fixierbereich 90 umfasst ein zu dem Formschlusselement 76 korrespondierendes Formschlusselement 92, das beispielhaft als ein Vorsprung 94 ausgebildet ist. Durch das Federelement 86 werden die beiden Formschlusselemente 76, 92, und damit die Höhenverstellvorrichtung 52, im unbetätigten Zustand des Betätigungselements 82 in einer Formschluss- bzw. Hintergriffstellung fixiert.

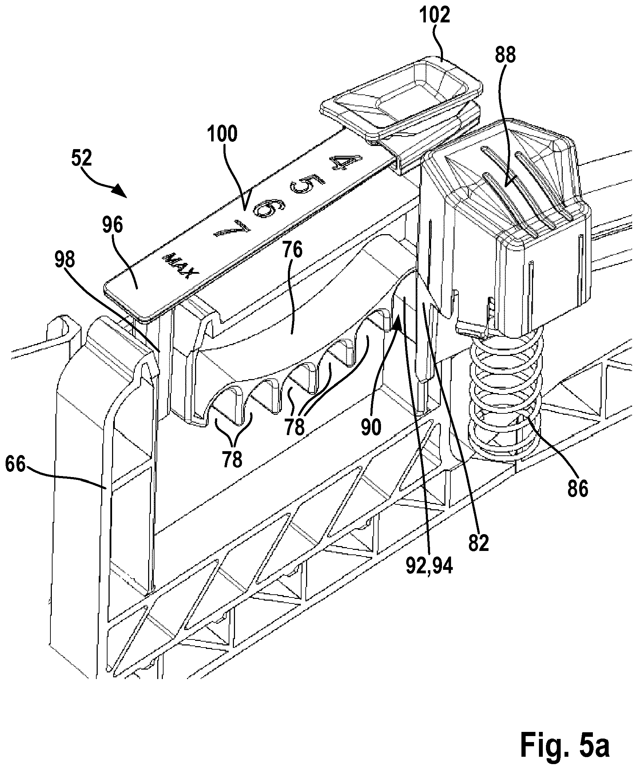

In Fig. 5a ist die Höhenverstellvorrichtung 52 im unbetätigten Zustand gezeigt. Der Vorsprung 94 des Betätigungselements 82 ist formschlüssig in der äußersten Aufnahmetasche 78 des Koppelglieds 66 fixiert. Benachbart zu dem Formschlusselement 76 des Koppelglieds 66 ist ein Anzeigeelement 96 angeordnet. Das Anzeigeelement 96 weist einen stiftförmigen Bereich 98 auf, der in einem Spalt des Koppelglieds 66 geführt ist. Senkrecht zu dem stiftförmigen Bereich 98 erstreckt sich ein Anzeigebereich 100 des Anzeigeelements 96, auf dem die unterschiedlichen Positionen, in denen die Höhenverstellvorrichtung 52 und damit die Räder 14 fixierbar sind, markiert sind. Der Anzeigebereich 100 des Anzeigeelements 96 erstreckt sich insbesondere oberhalb und parallel zu dem Formschlusselement 76 des Koppelglieds 66. Des Weiteren ist das Anzeigeelement 96 in einem Fensterelement 102 geführt, das in einer Gehäuseöffnung (nicht dargestellt) des Gehäuses 12 angeordnet ist. Über das Fensterelement 102 ist der von dem Fensterelement 102 umschlossene Anzeigebereich 100 des Anzeigeelements 96 von außerhalb des Gehäuses 12 sichtbar. Dadurch ist vorteilhaft immer nur die aktuelle Schnitthöhe sichtbar, was die Ablesefreundlichkeit und damit die Bedienfreundlichkeit steigert. Um ein Eindringen von Schmutz oder Wasser in das Gehäuse 12 zu verhindern, ist in dem Fensterelement 102 in transparentes Sichtfenster (nicht dargestellt), das beispielhaft aus einem Kunststoff ausgebildet sein kann, eingesetzt.

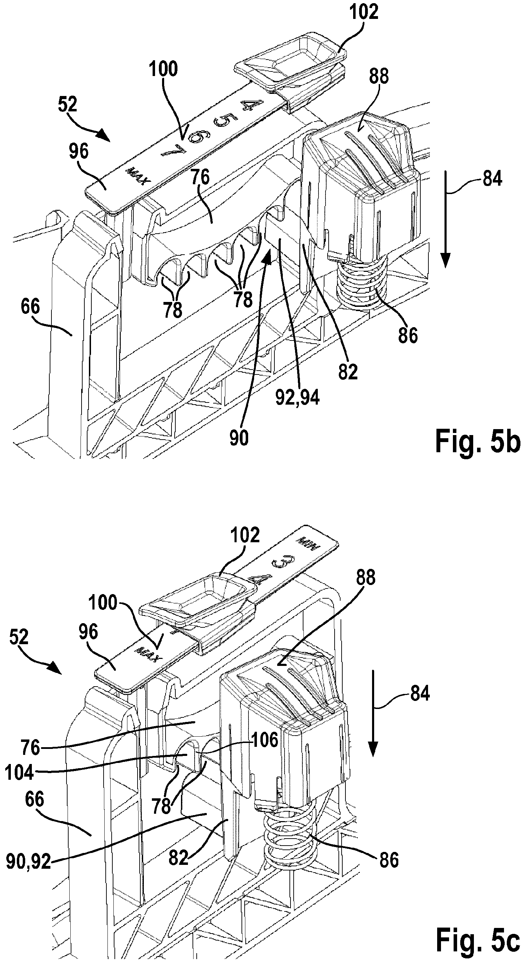

In Fig. 5b ist die Höhenverstellvorrichtung 52 im betätigten Zustand gezeigt. Eine Kraft auf den Betätigungsbereich 88 des Betätigungselements 82 bewirkt eine translatorische Bewegung des Betätigungsbereichs 88 und des Fixierbereichs 90, der unbeweglich, da einstückig, mit dem Betätigungsbereich 88 verbunden ist. Der Vorsprung 94 wird aus der Hintergriffstellung gelöst und verlässt die Aufnahmetasche 78 des Koppelglieds. Dadurch wird die Fixierung zwischen dem Gehäuse 12 und der Höhenverstellvorrichtung 52 gelöst, sodass sich das Koppelglied 66 und über die Gelenke 64, 72 auch die Räder 14 um die Schwenkachse 58 verschwenken können. Vorteilhaft wird dabei der Handgriff 80 umgriffen, wodurch einhändig und komfortabel die gewünschte Höhe eingestellt werden kann.

In Fig. 5c ist die Höhenverstellvorrichtung 52 im betätigten Zustand zwischen zwei Positionen gezeigt. Insbesondere befindet sich der Vorsprung 94 des Betätigungselements 82 unterhalb einer Wandung 104, die zwei Aufnahmetaschen 78 voneinander trennt. Damit das Betätigungselement 82 bei einem Wegfall der Kraft in Betätigungsrichtung 84 sich nicht verkantet und selbsttätig in eine der beiden Aufnahmetaschen 78 einrastet, ist der Vorsprung 94 im Fixierbereich 90 zumindest doppelt so breit wie die Wandung 104 und abgerundet ausgebildet. Dadurch kann der Vorsprung 94 mittels der Federkraft durch das Federelement 86 entlang der Wandung 104 in eine der Aufnahmetaschen 78 gleiten.

Wie aus der Zusammenschau der Fig. 5b und Fig. 5c zu erkennen ist, bewegen sich das Betätigungselement 82, das Anzeigeelement 96 und das Fensterelement 102, durch das die Position angezeigt wird, relativ zu dem Koppelglied 66 bei einem Wechsel der Position der Höhenverstellvorrichtung 52. Da sich das Koppelglied 66 der Höhenverstellvorrichtung 52 durch die parallelogrammartige Lagerung auf einer kreisförmigen Bahn bewegt, verändert sich die Höhe des Koppelglieds 66 während dieser Bewegung. Zum Höhenausgleich zwischen dem Koppelglied 66 und dem Betätigungselement 82 ist das Formschlusselement 76 des Koppelglieds 66 vorteilhaft derart geformt, dass die Aufnahmetaschen 78 auf unterschiedlichen Höhen sitzen. Die Positionierung der Aufnahmetaschen 78 ist derart gewählt, dass das Betätigungselement 82 stets in derselben Höhe in die Hintergriffstellung mit dem Koppelglied 66 einrastet. Da das Anzeigeelement 96 sowohl im Gehäuse 12, durch das am Gehäuse 12 befestigbare Fensterelement 102, als auch in der Höhenverstellvorrichtung 52, durch den zuvor beschriebenen Spalt, geführt ist, erfolgt der Höhenausgleich des Anzeigeelements 96 durch den im Spalt beweglich aufgenommenen stiftförmigen Bereich.

Des Weiteren ist das in der Gehäuseöffnung angeordnete Fensterelement 102, das Anzeigeelement 96, das Koppelglied 66 und das Betätigungselement 82 stets zumindest teilweise untereinander angeordnet, wodurch ein konstruktiv besonders einfacher und kompakter Aufbau ermöglicht wird.

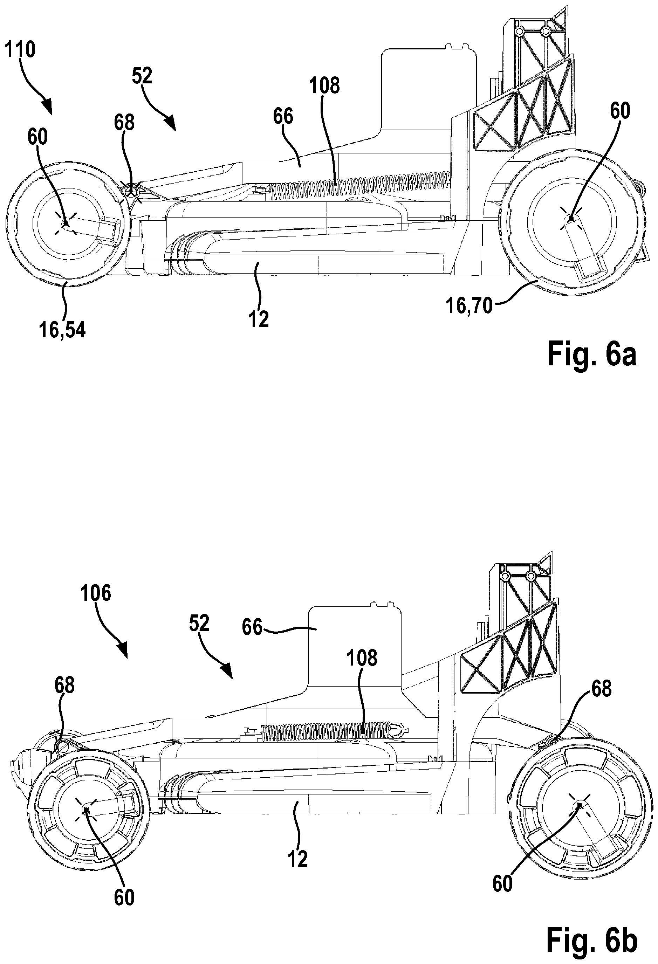

In Fig. 6a ist das Bodenbearbeitungsgerät 10 in einer Minimalposition 110 gezeigt, in der die Schnitthöhe minimal ist. Die Höhenverstellvorrichtung 52, insbesondere das Koppelglied 66, ist mit dem Gehäuse 12 über eine Rückstellelement 108, das als Spiralfeder ausgebildet ist, verbunden. Vorzugsweise wird die Höhenverstellvorrichtung 52 durch das Rückstellelement 108 mit einer Zugkraft belastet. Dies führt dazu, das bei einer Betätigung des Betätigungselements 82 und dem damit verbundenen Lösens der Fixierung zwischen dem Koppelglied 66 und dem Gehäuse 12 das Koppelglied 66 aufgrund der Zugkraft des Rückstellelements 108 selbsttätig in Richtung der Maximalposition 106 verschwenkt wirkt oder abhängig von einer Beladung der Auffangvorrichtung 28 zumindest kraftarm verstellt werden kann. Das Bodenbearbeitungsgerät 10 in der Maximalposition 106 ist in Fig. 6b gezeigt. Durch die benachbarte Anordnung des Handgriffs 80, des Betätigungselements 82 und des Anzeigeelements 96 nebeneinander kann die Höhenverstellvorrichtung 52 mit einer Hand gesteuert werden. Der Handgriff 80 wird von der Hand umgriffen und das Betätigungselement 82 mit dem Daumen betätigt während das Anzeigeelement 96 durch die Gehäuseöffnung sichtbar ist.

## Patentansprüche

1. Bodenbearbeitungsgerät, insbesondere Rasenmäher, mit einem Gehäuse (12), an dem zumindest zwei Räder (16) schwenkbar gelagert sind und in dem ein Mähwerk (14) aufgenommen ist, mit einer Höhenverstellvorrichtung (52) zur Schnitthöhenverstellung, über die die Räder (16) um eine Schwenkachse (58) relativ zum Gehäuse (12) in zumindest zwei unterschiedliche Positionen fixierbar sind, wobei die Höhenverstellvorrichtung (52) ein Koppelglied (66) zur Kopplung der Schwenkbewegungen der Räder (16) und ein Betätigungselement (82) aufweist, wobei das Betätigungselement (82) translatorisch beweglich am, insbesondere im, Gehäuse (12) gelagert ist, wobei das Betätigungselement (82) über einen Fixierbereich (90) formschlüssig mit dem Koppelglied (66) verbindbar ist, wobei ein Betätigungsbereich (88) des Betätigungselements (82) und der Fixierbereich (90) relativ zueinander unbeweglich ausgebildet sind, und mit einem Handgriff (80), wobei der Handgriff (80) zentral über dem Mähwerk (14) angeordnet ist und das Betätigungselement (82) zur Betätigung der Höhenverstellvorrichtung (52) benachbart zu dem Handgriff (80) angeordnet ist, **dadurch gekennzeichnet, dass** der Handgriff (80) derart von dem Betätigungsbereich (88) des Betätigungselements (82) beabstandet ist, dass beim Umgreifen des Handgriffs (80) mit einer Handinnenfläche gleichzeitig das Betätigungselement (82) mit dem Daumen betätigbar ist.

2. Bodenbearbeitungsgerät nach Anspruch 1, **dadurch gekennzeichnet, dass** das Betätigungselement (82) im Gehäuse (12) versenkbar ausgebildet ist.

3. Bodenbearbeitungsgerät nach einem der vorhergehenden Ansprüche, **dadurch gekennzeichnet, dass** die Höhenverstellvorrichtung (52) derart federbelastet ist, dass während einer Betätigung des Betätigungselements (82) das Koppelglied (66) zumindest kraftlos oder selbsttätig verschoben wird.

4. Bodenbearbeitungsgerät nach einem der vorhergehenden Ansprüche, **dadurch gekennzeichnet, dass** das Koppelglied (66) von einem Rückstellelement (108) entlang einer Bewegungsrichtung des Koppelglieds (66) belastet wird.

5. Bodenbearbeitungsgerät nach einem der vorhergehenden Ansprüche, **dadurch gekennzeichnet, dass** das Koppelglied (66) zumindest zwei, insbesondere sechs, Aufnahmetaschen (78) aufweist, die verbindbar mit dem Betätigungselement (82) sind.

6. Bodenbearbeitungsgerät nach einem der vorhergehenden Ansprüche, **dadurch gekennzeichnet, dass** die Höhenverstellvorrichtung (52) zwei Gelenke (64, 72) aufweist, die das Koppelglied (66) parallelogrammartig lagern.

7. Bodenbearbeitungsgerät nach einem der vorhergehenden Ansprüche, **dadurch gekennzeichnet, dass** das Koppelglied (66) ein Anzeigeelement (96) aufweist, das insbesondere benachbart zu Aufnahmetaschen (78) angeordnet ist.

8. Bodenbearbeitungsgerät nach einem der vorhergehenden Ansprüche, **dadurch gekennzeichnet, dass** ein Anzeigeelement (96) über eine Gehäuseöffnung des Gehäuses (12) von außen sichtbar ist.

9. Bodenbearbeitungsgerät nach einem der vorhergehenden Ansprüche, **dadurch gekennzeichnet, dass** das Betätigungselement (82), Aufnahmetaschen (78), ein Rückstellelement (108) und ein Anzeigeelement (96) vollständig zwischen Gelenken (64, 72) angeordnet sind.

10. Bodenbearbeitungsgerät nach einem der vorhergehenden Ansprüche, **dadurch gekennzeichnet, dass** das Betätigungselement (82) benachbart zu, insbesondere zwischen, einem Anzeigeelement (96) und dem Handgriff (80) angeordnet ist.

11. Bodenbearbeitungsgerät nach einem der vorhergehenden Ansprüche, **dadurch gekennzeichnet, dass** das Betätigungselement (82), ein Anzeigeelement (96) und der Handgriff (80) auf derselben Höhe angeordnet sind.

12. Bodenbearbeitungsgerät nach einem der vorhergehenden Ansprüche, **dadurch gekennzeichnet, dass** ein Anzeigeelement (96) teilweise im Gehäuse (12) und teilweise in der Höhenverstellvorrichtung (52) geführt ist.

## Claims

1. Ground-working implement, in particular lawnmower, having a housing (12), on which at least two wheels (16) are pivotably mounted and in which a mowing unit (14) is accommodated, having a height-adjusting device (52) for adjusting the cutting height and by means of which the wheels (16) can be fixed in at least two different positions around a pivot axis (58) relative to the housing (12), wherein the height-adjusting device (52) has a coupling member (66) for coupling the pivoting movements of the wheels (16), and also has an actuating element (82), wherein the actuating element (82) is mounted so as to be able to move translationally on, in particular in, the housing (12), wherein the actuating element (82) can be connected in a form-fitting manner to the coupling member (66) by way of a fixing region (90), wherein an actuating region (88) of the actuating element (82) and the fixing region (90) are designed to be immobile relative to one another, and having a handle (80), wherein the handle (80) is arranged centrally above the mowing unit (14) and the actuating element (82) for actuating the height-adjusting device (52) is arranged so as to be adjacent to the handle (80), **characterized in that** the handle (80) is spaced apart from the actuating region (88) of the actuating element (82) in such a manner that, when gripping the handle (80) in the palm of the hand, it is possible to actuate the actuating element (82) with the thumb at the same time.

2. Ground-working implement according to Claim 1, **characterized in that** the actuating element (82) can be recessed in the housing (12).

3. Ground-working implement according to either of the preceding claims, **characterized in that** the height-adjusting device (52) is spring-loaded in such a manner that the coupling member (66) is displaced at least in a force-free manner or automatically during an actuation of the actuating element (82).

4. Ground-working implement according to any of the preceding claims, **characterized in that** the coupling member (66) is loaded by a restoring element (108) along a direction of movement of the coupling member (66) .

5. Ground-working implement according to any of the preceding claims, **characterized in that** the coupling member (66) has at least two, in particular six, receiving pockets (78), which can be connected to the actuating element (82).

6. Ground-working implement according to any of the preceding claims, **characterized in that** the height-adjusting device (52) has two links (64, 72), which mount the coupling member (66) in the manner of a parallelogram.

7. Ground-working implement according to any of the preceding claims, **characterized in that** the coupling member (66) has a display element (96), which is arranged in particular so as to be adjacent to receiving pockets (78).

8. Ground-working implement according to any of the preceding claims, **characterized in that** a display element (96) is visible from the outside by way of an opening in the housing (12).

9. Ground-working implement according to any of the preceding claims, **characterized in that** the actuating element (82), receiving pockets (78), a restoring element (108) and a display element (96) are arranged entirely between links (64, 72).

10. Ground-working implement according to any of the preceding claims, **characterized in that** the actuating element (82) is arranged so as to be adjacent to, in particular between, a display element (96) and the handle (80).

11. Ground-working implement according to any of the preceding claims, **characterized in that** the actuating element (82), a display element (96) and the handle (80) are arranged at the same height.

12. Ground-working implement according to any of the preceding claims, **characterized in that** a display element (96) is guided partially in the housing (12) and partially in the height-adjusting device (52).

## Revendications

1. Appareil de travail du sol, notamment tondeuse à gazon, avec un carter (12) sur lequel au moins deux roues (16) sont montées de manière pivotante et dans lequel est reçue une barre de coupe (14), avec un dispositif de réglage de la hauteur (52) pour le réglage de la hauteur de coupe, par l'intermédiaire duquel les roues (16) peuvent être fixées dans au moins deux positions différentes autour d'un axe de pivotement (58) par rapport au carter (12), le dispositif de réglage de la hauteur (52) présentant un organe de couplage (66) pour le couplage des mouvements de pivotement des roues (16) et un élément d'actionnement (82), l'élément d'actionnement (82) étant monté de manière mobile en translation sur, notamment dans, le carter (12), l'élément d'actionnement (82) pouvant être relié par complémentarité de forme à l'organe de couplage (66) par l'intermédiaire d'une zone de fixation (90), une zone d'actionnement (88) de l'élément d'actionnement (82) et la zone de fixation (90) étant configurées pour être immobiles l'une par rapport à l'autre, et avec une poignée (80), la poignée (80) étant agencée au centre au-dessus de la barre de coupe (14) et l'élément d'actionnement (82) étant agencé au voisinage de la poignée (80) pour actionner le dispositif de réglage de la hauteur (52), **caractérisé en ce que** la poignée (80) est espacée de la zone d'actionnement (88) de l'élément d'actionnement (82) de telle sorte que lorsque la poignée (80) est saisie avec la paume d'une main, l'élément d'actionnement (82) peut être actionné simultanément avec le pouce.

2. Appareil de travail du sol selon la revendication 1, **caractérisé en ce que** l'élément d'actionnement (82) est configuré pour pouvoir être escamoté dans le carter (12) .

3. Appareil de travail du sol selon l'une quelconque des revendications précédentes, **caractérisé en ce que** le dispositif de réglage de la hauteur (52) est sollicité par ressort de telle sorte que pendant un actionnement de l'élément d'actionnement (82), l'organe de couplage (66) est déplacé au moins sans force ou de manière autonome.

4. Appareil de travail du sol selon l'une quelconque des revendications précédentes, **caractérisé en ce que** l'organe de couplage (66) est sollicité par un élément de rappel (108) le long d'une direction de déplacement de l'organe de couplage (66).

5. Appareil de travail du sol selon l'une quelconque des revendications précédentes, **caractérisé en ce que** l'organe de couplage (66) présente au moins deux, notamment six, poches de réception (78) qui peuvent être reliées à l'élément d'actionnement (82).

6. Appareil de travail du sol selon l'une quelconque des revendications précédentes, **caractérisé en ce que** le dispositif de réglage de la hauteur (52) présente deux articulations (64, 72) qui supportent l'organe de couplage (66) à la manière d'un parallélogramme.

7. Appareil de travail du sol selon l'une quelconque des revendications précédentes, **caractérisé en ce que** l'organe de couplage (66) présente un élément d'affichage (96) qui est agencé notamment au voisinage des poches de réception (78).

8. Appareil de travail du sol selon l'une quelconque des revendications précédentes, **caractérisé en ce qu'**un élément d'affichage (96) est visible de l'extérieur par l'intermédiaire d'une ouverture de carter du carter (12).

9. Appareil de travail du sol selon l'une quelconque des revendications précédentes, **caractérisé en ce que** l'élément d'actionnement (82), les poches de réception (78), un élément de rappel (108) et un élément d'affichage (96) sont entièrement agencés entre des articulations (64, 72).

10. Appareil de travail du sol selon l'une quelconque des revendications précédentes, **caractérisé en ce que** l'élément d'actionnement (82) est agencé au voisinage, notamment entre un élément d'affichage (96) et la poignée (80) .

11. Appareil de travail du sol selon l'une quelconque des revendications précédentes, **caractérisé en ce que** l'élément d'actionnement (82), un élément d'affichage (96) et la poignée (80) sont agencés à la même hauteur.

12. Appareil de travail du sol selon l'une quelconque des revendications précédentes, **caractérisé en ce qu'**un élément d'affichage (96) est guidé en partie dans le carter (12) et en partie dans le dispositif de réglage de la hauteur (52).
